# EUROPEAN PATENT SPECIFICATION

(11) **EP 1 949 828 B1**
(45) Date of publication and mention of the grant of the patent: **18.03.2009**
(21) Application number: 07425043.2
(22) Date of filing: 29.01.2007
(51) Int. Cl.: A47J 31/40

(54) **Method and apparatus for heating a liquid to various desired temperatures for the preparation of drinks**
Verfahren und Vorrichtung zum Erwärmen einer Flüssigkeit auf verschiedene gewünschte Temperaturen zur Zubereitung von Getränken
Procédé et appareil pour chauffer un liquide à des températures multiples pour la préparation de boissons

(43) Date of publication of application: 30.07.2008
(73) Proprietor: Gruppo Cimbali S.p.A., 20082 Binasco (MI) (IT)
(72) Inventor: Coccia, Andrea, 20082 Binasco (MI) (IT); Sala, Dario, 20082 Binasco (MI) (IT)
(74) Representative: Perani, Aurelio

(56) References cited:
- EP-A- 1 776 904
- US-A- 6 099 878

## Description

The present invention relates to a method for heating a dose of liquid to various desired temperatures for the preparation of a hot drink.

In accordance with a preferred feature of the method, moreover, a dose of liquid for the preparation of the beverage is heated to a predetermined temperature and a dose of a preparation representing the drink is caused to flow into the dose of heated liquid.

The invention further relates to an apparatus adapted to carry out the method preferably, but not exclusively, in conjunction with an espresso coffee machine.

As is known, amongst the equipment used in bars, hotels, restaurants and the like, the machine commonly known as an espresso coffee machine is in practice a device which provides many services other than espresso coffee.

These machines may be used to supply hot water which can be used to prepare infusions such as tea and camomile, chocolate and soups of various meat- or vegetable-based types.

These machines may also be used to provide superheated steam which, as a result of its thermal and kinetic energy, makes it possible rapidly to heat milk and to form the froth characteristic of cappuccino coffee.

In machines of a conventional type, the operator has to carry out various manual operations to produce the drink, such as inserting the filter with the dose of coffee into the machine and manually removing the grounds, directing steam into the jug containing the milk or chocolate, and has to be relatively skilled to produce a drink of the best possible quality at the desired temperature.

As espresso coffee machines have become increasingly widespread in the world market, machines have been developed in recent years in which the bar operator's manual operations are increasingly automated so that operators do not need to possess particular manual skills. In this respect, producers in the sector have come up with inventions adapted to automate, with results which are on a par with manual preparation, the preparation of espresso coffee, whipped milk and cappuccino coffee and lastly even the supply of hot water.

The production of hot chocolate, for instance, represents a further development of automated functions able to achieve a result comparable, in terms of density and temperature, with the result which can be obtained manually.

In the known devices which have long been used in distributors' markets, the automatic preparation of a drink, for instance chocolate, is normally carried out by supplying predetermined doses of a powder preparation and hot water produced in a heater to a mixer. The process ends with a brief rinse with hot water from the same supply.

In these heaters, which are conventionally formed by closed boilers or by open-top tanks, the temperature of the hot water may vary to some extent as a result of the hysteresis of the thermostats, the stratification of the liquid at rest and the thermal inertia of the cold water with which it is topped up.

The drink is prepared with a low powder concentration so that the mixture is kept fluid in order to prevent any sediment which could block the supply apparatus.

The temperature limits of the boiler also have an impact on the efficiency of the automatic washing cycles of the mixer.

If the temperature rises to values which are too high, some components of the mixtures of commercial powder preparations may be "overcooked", with a detrimental effect on the aroma and taste of the drink.

In accordance, therefore, with the known technologies for automated preparation and dispensing of drinks, hot drinks of the type described above, especially chocolate-based drinks, do not achieve the temperature and density conditions which would make them comparable with manually prepared drinks.

Combining an apparatus for the production of hot drinks with an automatic espresso coffee machine also means that a hot water source already installed in the machine has to be shared, taking away some of the hot water intended for the coffee. This is particularly problematic in the case of small machines with small heaters, especially as, to limit damage, it may not be possible subsequently to supply the services requiring the heater until the latter has returned to appropriate heat conditions.

Machines provided with a single steam boiler in which the available water is superheated are a particular case as it would be necessary to add a specific water heater, thereby increasing the installed power and the complexity of the machine.

In European Patent Application EP 1 776 904, the drink, a chocolate-based drink in this particular case, is prepared by a method and an apparatus in which the preparation liquid, which may be water or milk, is heated by transferring condensation heat from the steam produced by the boiler of the coffee machine.

In this apparatus, the supply temperature is set to a constant value as the flows of the steam and the liquid for preparing the drink are predetermined.

Also in US-A 6099878 is disclosed a method for heating a dose of liquid for preparing a drink. In particular this document discloses that a pulse of steam flowing at a constant rate is caused to merge with a flow of the liquid for preparing the drink. According to the disclosure, the pulse of steam begins some time after the beginning of the pumping phase.

The growing demand from consumers for various types of drink, for instance infusions, hot soups or derivative drinks combining whipped milk, coffee and chocolate, are making it necessary to be able to program and produce supplies in a simple and flexible manner, particularly as regards the final temperature of the drink in the cup.

While, in accordance with the disclosure of the above-mentioned European Patent Application EP 1 776 904, a constant supply temperature may be obtained, once it has been set, it would be necessary, in order to vary its level, to vary the ratio between the flows of the steam and the liquid for preparing the drink by changing the calibrated throttle valves or using proportional control electrovalves. There are high costs and functional problems in both of these cases which are incompatible with the design requirements of the machine.

The object of the present invention is therefore to provide a method for heating the liquid for preparing the drink to a temperature appropriate to each kind of drink and for heating the same drink to different temperatures in keeping with the user's specific wishes.

A further object is to provide a method of the type described above which can be automated in particular, but not exclusively, on an espresso coffee machine whether of the bar or automatic drink dispenser type.

This object is achieved by a method according to the accompanying claim 1 and by an apparatus according to claim 25.

The invention will be described below with reference to an embodiment thereof, given by way of non-limiting example and shown in the accompanying drawings, in which:
Fig. 1 is a diagram of an apparatus for heating the liquid for preparing a drink of the invention;
Fig. 2 is a diagram of an apparatus for heating the liquid for preparing the drink and for supplying the prepared drink..

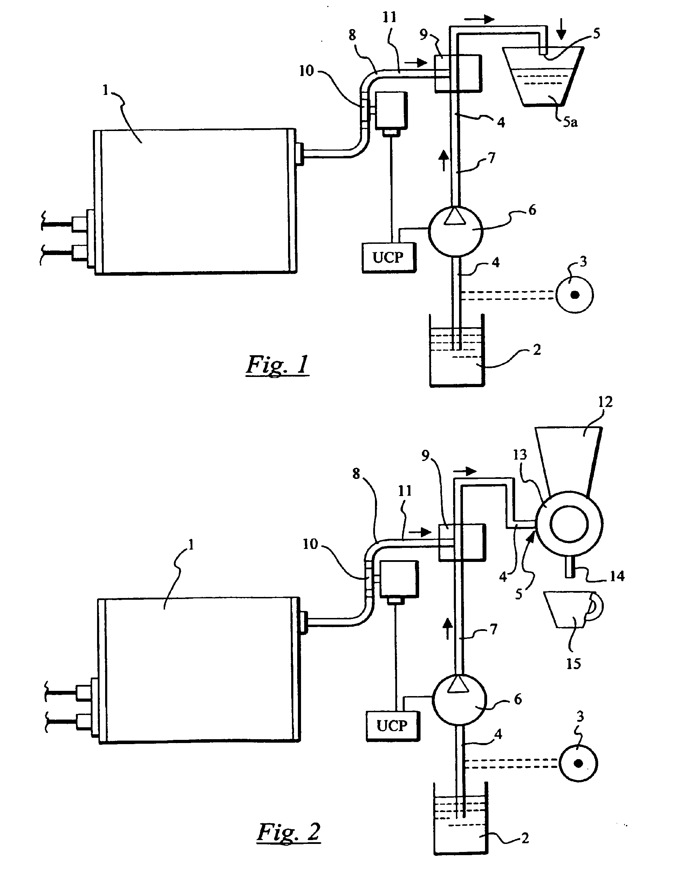

In Fig. 1, a source of hot water and steam is shown by 1. By way of example, the source 1 may be the boiler of a machine for preparing espresso and cappuccino coffee and other drinks of the type disclosed in WO2002/008296 which is able to supply energy to the steam by maintaining its supply pressure within a very small band of fluctuation and therefore with a flow which is in practice constant. Through the intelligent use of the accumulated energy, this type of boiler may provide the apparatus for heating the liquid for preparing the drink with the necessary heat with no detrimental effect on any other services and without making it necessary to increase the installed power.

A tank, possibly cooled in a conventional manner, for the liquid for preparing the drink, is shown by 2. This liquid may be fresh or long-life milk. As an alternative, it may simply be water at ambient temperature.

In the latter case, the tank 2 may advantageously be replaced by a source 3 shown by a conventional connection to the drinking water mains supply which may also be advantageously used, after heating, to wash the tubes of the apparatus, as will be explained in further detail below.

A duct 4 leads from the tank 2 or the source 3 of the liquid for preparing the drink and reaches a supply point shown by 5 where it discharges into a collection container, for instance a cup 5a.

A pump 6 which may advantageously be a pump of peristaltic, and possibly of variable speed, type is disposed in the duct 4.

A throttle valve 7 of calibrated type is provided downstream of the pump 6.

A further duct 8 is disposed between the steam source of the boiler 1 and a point of confluence 9 with the duct 4 of the liquid for preparing the drink. This point of confluence 9 is disposed between the calibrated throttle valve 7 and the supply point 5 of the liquid for preparing the drink.

When the pump 6 is actuated, the liquid is supplied at a predetermined pressure via the duct 4 and the calibrated throttle valve 7 to the point of confluence 9.

An electrovalve 10 of the on/off type is disposed in the duct 8 and is actuated simultaneously with the pump 6 by means of a control and programming unit UCP which can be programmed by methods which will be described in further detail below. A further calibrated throttle valve 11 may also be disposed in the duct 8.

When the steam from the duct 8 comes into contact at the point of confluence 9 with the cold liquid from the tank 2 or the source 3, supplied by the pump 6, it condenses and gives up condensation heat and part of its specific heat to the liquid, whether water or milk, being supplied via the duct 4.

In accordance with the invention, the valve 10 which is, as mentioned above, of the on/off type, is pulse-actuated by the control and programming unit UCP so as to supply quantities of steam at different frequencies and in different cycles.

The final temperature of a certain quantity of the liquid for preparing the drink in which a certain quantity of steam has been condensed, once the initial temperature of the liquid and the steam has been predetermined, depends solely on the ratio between the final quantity of liquid supplied and the quantity of steam condensed therein, i.e. the total quantity from all the individual pulses.

The condensation of the steam in the liquid does not need to take place with a constant flow.

In accordance with the invention it is therefore possible to set the desired temperature of the liquid output from the point of confluence 9 to the supply point 5 and to heat the liquid for preparing the drink to the temperature appropriate for each kind of drink and to heat the same drink to different temperatures in keeping with the user's specific wishes.

In accordance with the apparatus of Fig. 1, the cup container 5a may be directly used to prepare the drink by placing a dose of preparation, for instance a teabag or camomile sachet, a dose of instant coffee or even a dose of condensed milk, therein.

As an alternative, the container 5a may also be used solely to collect a quantity of water or milk heated to the desired temperature which may be programmed in the control and programming unit UCP.

With reference to Fig. 2, it can be seen that the supply point 5 of the liquid for preparing the drink is connected to a metering device 12 adapted to contain and meter a specific preparation for a particular drink, for instance powdered or liquid chocolate with or without flavouring products.

As an alternative, the preparation may be a vegetable- or meat-based soup extract, or a product containing powdered milk, or instant coffee powder or even products in syrup form.

The metering device 12 is connected to a mixing chamber 13 provided, if necessary, with a conventional whisk (not shown), in which the drink is prepared if it is of the type requiring particular mixing and whisking operations as in the case of chocolate-based drinks whose preparations may be in liquid or paste form and comprise ingredients and flavours according to particular gastronomic recipes.

The mixing chamber 13 is in turn provided with a supply nozzle 14 which extends into a lower collection container for the drink, shown in outline by the cup 15.

The method and apparatus of the invention therefore make it possible not only to heat the liquid for preparing a particular drink to the desired temperature but also to supply a whole range of drinks differing from one another by associating the supply point 5 of the heated preparation liquid with a plurality of operating units comprising respective metering devices 12 and mixing chambers 13, enabling a high degree of automation.

A particular drink which may be obtained by the method and apparatus of the invention is hot chocolate with a cup temperature which may be varied in accordance with the user's requirements.

**Table 1**

| Period: 2 s | | No cycles | Quantity of steam supplied | Final cup temperature |
|---|---|---|---|---|
| Open time | Close time | | | |
| 1s | 1 s | 5 | 9 g | 58 |
| 1.2 s | 0.8s | 5 | 10.44g | 65 |
| 1.4s | 0.6s | 5 | 11.88g | 70 |
| 1.6s | 0.4s | 5 | 13.32g | 75 |
| 1.8s | 0.2s | 5 | 14.76 g | 79 |
| 2s | 0 | 5 | 18g | 82 |

For instance, as can be seen from Table 1 above, starting from 30 g of powdered chocolate preparation, water at 15°C pumped via the pump 6 at a constant rate of 12 g/s, and steam at 123°C supplied from the boiler 1 via an electrovalve 10 at a rate of 1.8 g/s, it is possible to obtain 150 g of chocolate drink whose cup temperature is between 58°C and 82°C depending on the ratio of the opening and closing times of the valve 10 in the same cycle which is applied five consecutive times to the valve.

It will be appreciated that the number of cycles to be applied to the valve 10, the overall length of each cycle and the ratio between the opening and the closing times of the valve 10 in the cycle may be varied depending on needs, and their values set in the memory of the control and programming unit UCP which controls both the pump 6 and the electrovalve 10.

It should be noted that the method of the invention achieves a high speed of transmission of heat to the liquid for preparing the drink. In the case of steam from the boiler 1, for instance from a boiler of an espresso coffee machine, it is possible for instance, as a result of the heat accumulated in the superheated steam, to heat a litre of milk in one minute from 5°C to 80°C supplying a power of over 5000 watts.

It is therefore possible to dispense drinks at the correct temperature at high speeds of supply.

Moreover, because the preparation liquid is available at temperatures which are always very high, as shown by way of non-limiting example in Table 1, it is possible to provide chocolate drinks, even when dispensed automatically, with a density making them substantially comparable to similar drinks prepared manually using traditional methods.

Lastly, because water at high temperature is available even after closely spaced operating cycles, the method of the invention makes it possible efficiently to wash the tubes of the apparatus and in particular the mixing chamber 12 even if the drink residues in this chamber are of a relatively high density.

## Claims

1. A method for heating a dose of liquid to different desired temperatures for the preparation of a hot drink, **characterised in that** at least one pulse, of predetermined duration, of steam flowing at a predetermined constant rate from a steam source is caused to merge with a flow from a respective source, at a predetermined constant rate, of the liquid for preparing the drink, said pulse of predetermined duration being repeated cyclically for a predetermined number of times.

2. A method according to claims 1, **characterised in that** the duration of each steam flow pulse is equal to the time interval set between one pulse and the next.

3. A method according to claims 1 and 2, **characterised in that** the duration of each steam flow pulse is greater than the time interval set between one pulse and the next.

4. A method according to claims 1 and 2, **characterised in that** the duration of each steam flow pulse is smaller than the time interval set between one pulse and the next.

5. A method according to any one of claims 1 to 4, wherein the liquid for preparing the drink is formed by water taken from a source.

6. A method according to claim 5, wherein the water source is the mains water supply.

7. A method according to claim 5, wherein the water source is formed by a tank.

8. A method according to any of claims 1 to 4, wherein the liquid for preparing the drink is formed by milk taken from a relative container.

9. A method according to claim 8, wherein the milk is of the long-life type.

10. A method according to any one of claims 1 to 9, wherein the flow of steam is formed by superheated steam.

11. A method according to any one of claims 1 to 10, wherein the source of the flow of steam is the boiler of a machine for preparing and supplying espresso coffee.

12. A method according to any one of claims 1 to 11, **characterised in that** it includes the stage in which a dose of preparation for the production of the drink is caused to merge with the dose of heated liquid and the stage in which the drink is dispensed.

13. A method according to any one of claims 1 to 11, **characterised in that** a dose of heated liquid is caused to merge with a dose of preparation for the production of the drink and the stage in which the drink is dispensed.

14. A method according to any one of claims 1 to 13, wherein the preparation for the production of the drink contains chocolate in powdered form.

15. A method according to any one of claims 1 to 13, wherein the preparation for the production of the drink contains chocolate in liquid form.

16. A method according to any one of claims 1 to 13, wherein the preparation for the production of the drink contains condensed milk.

17. A method according to any one of claims 1 to 13, wherein the preparation for the production of the drink contains at least one soup extract.

18. A method according to claim 17, wherein the soup extract is meat-based.

19. A method according to claim 17, wherein the soup extract is vegetable-based.

20. A method according to any one of claims 1 to 13, wherein the preparation for the production of the drink is a plant product in leaf form.

21. A method according to any one of claims 1 to 13, wherein the preparation for the production of the drink is a plant product in syrup form.

22. A method according to any one of claims 1 to 13, wherein the preparation for the production of the drink is a plant product in powdered form.

23. A method according to any one of claims 1 to 13, wherein the preparation for the production of the drink is a product containing instant coffee.

24. A method according to any one of claims 1 to 13, wherein the preparation for the production of the drink is a product containing powdered milk..

25. An apparatus for heating a dose of liquid to various desired temperatures for the preparation of a hot drink, comprising a source of steam (1) and a source (2, 3) of liquid for preparing the drink, a duct (4) supplying the liquid for preparing the drink between the liquid source (2, 3) and a supply point (5), pumping means (6) disposed in this duct (4) and generating a flow of liquid at a predetermined constant rate of flow, a duct (8) for supplying the steam between the source of steam (1) and a point of confluence (9) in the duct (4) supplying the liquid for preparing the drink disposed between the pumping means (6) and the supply point (5), **characterized in that** it further includes interception means (10) in this steam supplying duct (8) adapted to cause pulses of the steam flow at a predetermined constant rate of flow, and a control and programming unit (UCP) for controlling pulses of predetermined duration from the interception means (10).

26. An apparatus according to claim 25, wherein the means (6) for pumping the liquid for preparing the drink comprised peristaltic pump.

27. An apparatus according to claim 26, wherein the peristaltic pump is of variable speed.

28. An apparatus according to claim 25, wherein the interception means (10) are formed by an electrovalve of the on/off type.

29. An apparatus according to claim 25, **characterised in that** it comprises calibrated throttle means (7) disposed in the duct (4) leading from the source (2, 3) of the liquid for preparing the drink and calibrated throttle means (11) disposed in the steam supply duct (8).

30. An apparatus according to claim 25, wherein the steam source is formed by the boiler of a machine for the preparation and supply of coffee.

31. An apparatus according to any one of claims 25 to 30, **characterised in that** it comprises a device (12) for metering the preparation for the production of the drink, a mixing chamber (13) communicating with the metering device (12) and communicating with the supply point (5) of the heated dose of the liquid for preparing the drink, this mixing chamber (13) being provided with an outlet (14) for dispensing the prepared drink.

## Patentansprüche

1. Verfahren, um eine Dosis einer Flüssigkeit auf unterschiedliche, gewünschte Temperaturen zu erhitzen, um ein heißes Getränk zuzubereiten, **dadurch gekennzeichnet, dass** zumindest ein Impuls von Dampf, der eine vorgegebene Dauer besitzt und mit einer vorgegebenen, konstanten Geschwindigkeit aus einer Dampfquelle fließt, dazu gebracht wird, sich mit einer Strömung von einer entsprechenden Quelle jener Flüssigkeit, aus der das Getränk zubereitet werden soll, zu vermischen, wobei die Strömung mit einer vorgegebenen, konstanten Geschwindigkeit fließt, wobei der Impuls von vorgegebener Dauer zyklisch mit einer vorgegebenen Anzahl von Impulsen wiederholt wird.

2. Verfahren gemäß Anspruch 1, **dadurch gekennzeichnet, dass** die Dauer eines jeden Impulses der Dampfströmung gleich dem Zeitintervall ist, das zwischen einem Impuls und dem nächsten Impuls eingestellt wurde.

3. Verfahren gemäß Anspruch 1 und 2, **dadurch gekennzeichnet, dass** die Dauer eines jeden Impulses der Dampfströmung größer als das Intervall ist, das zwischen einem Impuls und dem nächsten Impuls eingestellt wurde.

4. Verfahren gemäß Anspruch 1 und 2, **dadurch gekennzeichnet, dass** die Dauer eines jeden Impulses der Dampfströmung kleiner als das Zeitintervall ist, das zwischen einem Impuls und dem nächsten Impuls eingestellt wurde.

5. Verfahren gemäß irgendeinem der Ansprüche 1 bis 4, wobei die Flüssigkeit für die Zubereitung des Getränks von Wasser gebildet wird, das von einer Quelle entnommen wird.

6. Verfahren gemäß Anspruch 5, wobei die Wasserquelle die Hauptwasserleitung ist.

7. Verfahren gemäß Anspruch 5, wobei die Wasserquelle von einem Behälter gebildet wird.

8. Verfahren gemäß irgendeinem der Ansprüche 1 bis 4, wobei die Flüssigkeit für die Zubereitung des Getränks von Milch gebildet wird, die von einem entsprechenden Behälter entnommen wird.

9. Verfahren gemäß Anspruch 8, wobei die Milch eine Haltbarmilch ist.

10. Verfahren gemäß irgendeinem der Ansprüche 1 bis 9, wobei die Dampfströmung von überhitztem Dampf gebildet wird.

11. Verfahren gemäß irgendeinem der Ansprüche 1 bis 10, wobei die Quelle der Dampfströmung der Heißwasserbereiter einer Maschine für die Zubereitung und Abgabe von Espressokaffee ist.

12. Verfahren gemäß irgendeinem der Ansprüche 1 bis 11, **dadurch gekennzeichnet, dass** das Verfahren einen Schritt aufweist, in dem eine Dosis des Präparats für die Herstellung des Getränks dazu gebracht wird, sich mit einer Dosis der erhitzten Flüssigkeit zu vermischen, sowie einen Schritt aufweist, in dem das Getränk abgegeben wird.

13. Verfahren gemäß irgendeinem der Ansprüche 1 bis 11, **dadurch gekennzeichnet, dass** eine Dosis der erhitzten Flüssigkeit dazu gebracht wird, sich mit einem Präparat für die Herstellung des Getränks zu vermischen, wobei das Verfahren einen Schritt aufweist, in dem das Getränk abgegeben wird.

14. Verfahren gemäß irgendeinem der Ansprüche 1 bis 13, wobei das Präparat für die Herstellung des Getränks Schokolade in Pulverform enthält.

15. Verfahren gemäß irgendeinem der Ansprüche 1 bis 13, wobei das Präparat für die Herstellung des Getränks Schokolade in flüssiger Form enthält.

16. Verfahren gemäß irgendeinem der Ansprüche 1 bis 13, wobei das Präparat für die Herstellung des Getränks Kondensmilch enthält.

17. Verfahren gemäß irgendeinem der Ansprüche 1 bis 13, wobei das Präparat für die Herstellung des Getränks zumindest ein Suppenextrakt enthält.

18. Verfahren gemäß Anspruch 17, wobei das Suppenextrakt ein Suppenextrakt auf Fleischbasis ist.

19. Verfahren gemäß Anspruch 17, wobei das Suppenextrakt ein Suppenextrakt auf Gemüsebasis ist.

20. Verfahren gemäß irgendeinem der Ansprüche 1 bis 13, wobei das Präparat für die Herstellung des Getränks ein Pflanzenprodukt in Form von Blättern ist.

21. Verfahren gemäß irgendeinem der Ansprüche 1 bis 13, wobei das Präparat für die Herstellung des Getränks ein Pflanzenprodukt in Sirupform ist.

22. Verfahren gemäß irgendeinem der Ansprüche 1 bis 13, wobei das Präparat für die Herstellung des Getränks ein Pflanzenprodukt in Pulverform ist.

23. Verfahren gemäß irgendeinem der Ansprüche 1 bis 13, wobei das Präparat für die Herstellung des Getränks ein Produkt ist, das Instantkaffee enthält.

24. Verfahren gemäß irgendeinem der Ansprüche 1 bis 13, wobei das Präparat für die Herstellung des Getränks ein Produkt ist, das Milchpulver enthält.

25. Vorrichtung, um eine Dosis einer Flüssigkeit auf verschiedene, gewünschte Temperaturen zu erhitzen, um ein heißes Getränk zuzubereiten, wobei die Vorrichtung eine Dampfquelle (1) sowie eine Quelle (2, 3) einer Flüssigkeit für die Zubereitung des Getränks, eine Leitung (4), um die Flüssigkeit für die Zubereitung des Getränks zwischen der Flüssigkeitsquelle (2, 3) und einer Abgabestelle (5) zu leiten, eine Pumpeneinrichtung (6), die in dieser Leitung (4) angeordnet ist und eine Flüssigkeitsströmung mit einer vorgegebenen, konstanten Strömungsgeschwindigkeit erzeugt, sowie eine Leitung (8) umfasst, um den Dampf zwischen der Dampfquelle (1) und einer Stelle des Zusammenfließens (9) in der Leitung (4) zu leiten, die die Flüssigkeit für die Zubereitung des Getränks zuführt und zwischen der Pumpeneinrichtung (6) und der Abgabestelle (5) angeordnet ist, **dadurch gekennzeichnet, dass** die Vorrichtung weiters eine Absperreinrichtung (10) in der den Dampf zuführenden Leitung (8) aufweist, die so ausgebildet ist, dass sie Dampfimpulse hervorbringt, die mit einer vorgegebenen, konstanten Strömungsgeschwindigkeit fließen, sowie eine Steuer- und Programmiereinheit (UCP) aufweist, um die Impulse mit vorgegebener Dauer von der Absperreinrichtung (10) zu steuern.

26. Vorrichtung gemäß Anspruch 25, wobei die Einrichtung (6) zum Pumpen der Flüssigkeit für die Zubereitung des Getränks eine peristaltische Pumpe umfasst.

27. Vorrichtung gemäß Anspruch 26, wobei die peristaltische Pumpe eine variable Geschwindigkeit besitzt.

28. Vorrichtung gemäß Anspruch 25, wobei die Abschalteinrichtung (10) von einem EIN/AUS-Elektroventil gebildet wird.

29. Vorrichtung gemäß Anspruch 25, **dadurch gekennzeichnet, dass** die Vorrichtung eine kalibrierte Drosseleinrichtung (7) umfasst, die in der Leitung (4) angeordnet ist, die von der Quelle (2, 3) der Flüssigkeit für die Zubereitung des Getränks angeordnet ist, und die kalibrierte Drosseleinrichtung (11) in der Dampfzuleitung (8) angeordnet ist.

30. Vorrichtung gemäß Anspruch 25, wobei die Dampfquelle vom Heißwasserbereiter einer Maschine für die Zubereitung und Abgabe von Kaffee gebildet wird.

31. Vorrichtung gemäß irgendeinem der Ansprüche 25 bis 30, **dadurch gekennzeichnet, dass** die Vorrichtung eine Einrichtung (12) zum Portionieren des Präparats für die Herstellung des Getränks und eine Mischkammer (13) umfasst, die mit der Portioniereinrichtung (12) sowie mit der Abgabestelle (5) der erhitzten Dosis der Flüssigkeit für die Zubereitung des Getränks in Verbindung steht, wobei diese Mischkammer (13) mit einem Auslass (14) versehen ist, um das zubereitete Getränk abzugeben.

## Revendications

1. Procédé destiné à chauffer une dose de liquide à des températures souhaitées différentes pour la préparation d'une boisson chaude, **caractérisé en ce qu'**au moins une impulsion, de durée prédéterminée, de vapeur d'eau s'écoulant à une vitesse constante prédéterminée à partir d'une source de vapeur d'eau est obligée de se mélanger avec un écoulement à partir d'une source respective, à une vitesse constante prédéterminée, du liquide pour préparer la boisson, ladite impulsion de durée prédéterminée étant répétée de façon cyclique pour un nombre prédéterminé de fois.

2. Procédé selon la revendication 1, **caractérisé en ce que** la durée de chaque impulsion d'écoulement de vapeur d'eau est égale à l'intervalle temporel réglé entre une impulsion et l'impulsion suivante.

3. Procédé selon les revendications 1 et 2, **caractérisé en ce que** la durée de chaque impulsion d'écoulement de vapeur d'eau est plus importante que l'intervalle temporel réglé entre une impulsion et l'impulsion suivante.

4. Procédé selon les revendications 1 et 2, **caractérisé en ce que** la durée de chaque impulsion d'écoulement de vapeur d'eau est moins importante que l'intervalle temporel réglé entre une impulsion et l'impulsion suivante.

5. Procédé selon l'une quelconque des revendications 1 à 4, dans lequel le liquide pour préparer la boisson est formé par de l'eau prise à partir d'une source.

6. Procédé selon la revendication 5, dans lequel la source d'eau est le réseau d'eau public.

7. Procédé selon la revendication 5, dans lequel la source d'eau est formée par un réservoir.

8. Procédé selon l'une quelconque des revendications 1 à 4, dans lequel le liquide pour préparer la boisson est formé par du lait pris à partir d'un récipient relatif.

9. Procédé selon la revendication 8, dans lequel le lait est du type à longue vie.

10. Procédé selon l'une quelconque des revendications 1 à 9, dans lequel l'écoulement de vapeur d'eau est formé par de la vapeur d'eau surchauffée.

11. Procédé selon l'une quelconque des revendications 1 à 10, dans lequel la source de l'écoulement de vapeur d'eau est la chaudière d'une machine pour préparer et distribuer du café expresso.

12. Procédé selon l'une quelconque des revendications 1 à 11, **caractérisé en ce qu'**il comprend l'étape dans laquelle une dose de préparation pour la production de la boisson est obligée de se mélanger avec la dose de liquide chauffé et l'étape dans laquelle la boisson est distribuée.

13. Procédé selon l'une quelconque des revendications 1 à 11, **caractérisé en ce qu'**une dose de liquide chauffé est obligée de se mélanger avec une dose de préparation pour la production de la boisson et l'étape dans laquelle la boisson est distribuée.

14. Procédé selon l'une quelconque des revendications 1 à 13, dans lequel la préparation pour la production de la boisson contient du chocolat sous forme de poudre.

15. Procédé selon l'une quelconque des revendications 1 à 13, dans lequel la préparation pour la production de la boisson contient du chocolat sous forme de liquide.

16. Procédé selon l'une quelconque des revendications 1 à 13, dans lequel la préparation pour la production de la boisson contient du lait condensé.

17. Procédé selon l'une quelconque des revendications 1 à 13, dans lequel la préparation pour la production de la boisson contient au moins un extrait de soupe.

18. Procédé selon la revendication 17, dans lequel l'extrait de soupe est à base de viande.

19. Procédé selon la revendication 17, dans lequel l'extrait de soupe est à base de légumes.

20. Procédé selon l'une quelconque des revendications 1 à 13, dans lequel la préparation pour la production de la boisson est un produit végétal sous forme de feuille.

21. Procédé selon l'une quelconque des revendications 1 à 13, dans lequel la préparation pour la production de la boisson est un produit végétal sous forme de sirop.

22. Procédé selon l'une quelconque des revendications 1 à 13, dans lequel la préparation pour la production de la boisson est un produit végétal sous forme de poudre.

23. Procédé selon l'une quelconque des revendications 1 à 13, dans lequel la préparation pour la production de la boisson est un produit contenant du café instantané.

24. Procédé selon l'une quelconque des revendications 1 à 13, dans lequel la préparation pour la production de la boisson est un produit contenant du lait en poudre.

25. Appareil destiné à chauffer une dose de liquide jusqu'à diverses températures souhaitées pour la préparation d'une boisson chaude, comprenant une source de vapeur d'eau (1) et une source (2, 3) de liquide pour préparer la boisson, **caractérisé en ce qu'**il comprend une conduite (4) distribuant le liquide pour préparer la boisson entre le liquide source (2, 3) et un point d'alimentation (5), des moyens de pompage (6) disposés dans cette conduite (4) et générant un écoulement de liquide à une vitesse constante prédéterminée d'écoulement, une conduite (8) pour distribuer la vapeur d'eau entre la source de vapeur d'eau (1) et un point de confluence (9) dans la conduite (4) distribuer le liquide pour préparer la boisson disposés entre les moyens de pompage (6) et le point d'alimentation (5), **caractérisé en ce qu'**il comprend en outre des moyens d'interception (10) dans cette conduite de distribution de vapeur d'eau (8) adaptés pour entraîner des impulsions de l'écoulement d'écoulement de vapeur d'eau à une vitesse constante prédéterminée d'écoulement, et une unité de commande et de programmation (UCP) pour commander des impulsions de durée prédéterminée à partir des moyens d'interception (10).

26. Appareil selon la revendication 25, dans lequel les moyens (6) pour pomper le liquide pour préparer la boisson comprennent une pompe péristaltique.

27. Appareil selon la revendication 26, dans lequel la pompe péristaltique est de vitesse variable.

28. Appareil selon la revendication 25, dans lequel les moyens d'interception (10) sont formés par une électrovanne du type marche/arrêt.

29. Appareil selon la revendication 25, **caractérisé en ce qu'**il comprend des moyens d'étranglement calibrés (7) disposés dans la conduite (4) conduisant à partir de la source (2, 3) du liquide pour préparer la boisson et des moyens d'étranglement calibrés (11) disposés dans la conduite d'alimentation en vapeur d'eau (8).

30. Appareil selon la revendication 25, dans lequel la source de vapeur d'eau est formée par la chaudière d'une machine pour la préparation et la distribution de café.

31. Appareil selon l'une quelconque des revendications 25 à 30, **caractérisé en ce qu'**il comprend un dispositif (12) pour doser la préparation pour la production de la boisson, une chambre de mélange (13) communiquant avec le dispositif de dosage (12) et communiquant avec le point d'alimentation (5) de la dose chauffée du liquide pour préparer la boisson, cette chambre de mélange (13) étant pourvue d'une sortie (14) pour distribuer la boisson préparée.
